# EUROPEAN PATENT APPLICATION

(11) **EP 2 169 586 A1**
(43) Date of publication of application: **31.03.2010**
(21) Application number: 09010412.6
(22) Date of filing: 12.08.2009
(51) Int. Cl.: G06F 21/20

(54) **Key protecting method and a computing apparatus**

(30) Priority: 24.09.2008 TW 97136673
(71) Applicant: Yu Ton Electronic Co., Ltd., West Dist. Taichung City (TW)
(72) Inventor: Chou, Hung-Chien, Taichung City (TW)
(74) Representative: Schoppe, Fritz

(57) **Abstract**

A key protecting method includes the steps of: (a) in response to receipt of an access request, configuring a control application program module (11) to generate a key confirmation request; (b) in response to receipt of the key confirmation request, configuring a hardware control module (2) to generate, via the control application program module (11), a key input request to prompt a user for a key input; (c) upon receipt of the key input, configuring the hardware control module (2) to determine if the key input matches a predefined key preset in the hardware control module (2); (d) configuring the hardware control module (2) to enter an execution mode if it is determined in step (c) that the key input matches the predefined key; and (e) configuring the hardware control module (2) to enter a failure mode if it is determined in step (c) that the key input does not match the predefined key.

## Description

The invention relates to a key protecting method, more particularly to a key protecting method with a key confirming step that is performed by computer hardware.

In the 21^{st} century, computers are widely used to perform various functions, such as word processing, database management, account management, etc. However, malicious software (also known as "malware"), such as Trojan horse, provides hackers unauthorized access to the computers attacked by the malware, thereby leaving personal information, log-in accounts, pins, keys, etc., unprotected against hackers.

A Trojan horse generally refers to a computer program that users are tempted to install believing it to perform a desirable function, but that, in fact, performs a malicious function in disguise. Unlike computer viruses, Trojanhorses do not replicate themselves or contaminate other files, but have the characteristics of concealment, automatic execution, disguise, self-recovery, and file damaging and/or transferring abilities. When a computer is installed with a Trojan horse, operational information of the computer may be stolen, files in the computer may be destroyed or deleted, and the computer may even be remotely controlled by hackers. Troj an horses may be classified according to the purpose they serve, including information collection, data destruction, infiltration, etc. , which are achieved by means of remote access, packet interception, input data recording, data transferring, etc.

Consequently, how to effectively protect keys and pins from being stolen by hackers is a goal that those in the computer field are striving to achieve.

Therefore, the object of the present invention is to provide a key protecting method that effectively protects keys from being accessed by an operating system of a computer.

According to one aspect of the present invention, there is provided a key protecting method that includes the steps of: (a) in response to receipt of an access request, configuring a control application program module to generate a key confirmation request; (b) in response to receipt of the key confirmation request, configuring a hardware control module to generate, via the control application program module, a key input request to prompt a user for a key input; (c) upon receipt of the key input, configuring the hardware control module to determine if the key input matches a predefined key preset in the hardware control module; (d) configuring the hardware control module to enter an execution mode if it is determined in step (c) that the key input matches the predefined key; and (e) configuring the hardware control module to enter a failure mode if it is determined in step (c) that the key input does not match the predefined key.

According to another aspect of the present invention, there is provided a computing apparatus that includes an operating system block and a hardware control module. The operating system block is installed with a control application program module for receiving an access request, and generates a key confirmation request in response to the access request. The hardware control module includes a hardware control unit, a key comparing unit, and a processing unit. The hardware control unit is in communication with the control application program module for receiving the key confirmation request therefrom, and generates, via the control application program module, a key input request to prompt a user for a key input in response to receipt of the key confirmation request. The key comparing unit is coupled to the hardware control unit, determines, upon receipt of the key input by the user, if the key input matches a predefined key preset in the hardware control module, and transmits a comparison result to the hardware control unit to be subsequently transmitted to the control application programmodule by the hardware control unit. The processing unit is coupled to the hardware control unit, and is capable of executing a processing request.

The hardware control module enters an execution mode if it is determined by the key comparing unit that the key input matches the predefined key.

The hardware control module enters a failure mode if it is determined by the key comparing unit that the key input does not match the predefined key.

The present invention achieves the intended object by the fact that the key is directly inputted to the hardware control module for confirmation, and that the control application program module installed in the operating system block is only informed of the result of the key comparison, and not the key itself, such that the key is not accessible by malicious software possibly installed in the operating system block of the computing apparatus.

Other features and advantages of the present invention will become apparent in the following detailed description of the preferred embodiment with reference to the accompanying drawings, of which:
FIG.1 is a block diagram of a computing apparatus according to the preferred embodiment of the present invention; and
FIG.2 is a flow chart of a key protecting method according to the preferred embodiment of the present invention.

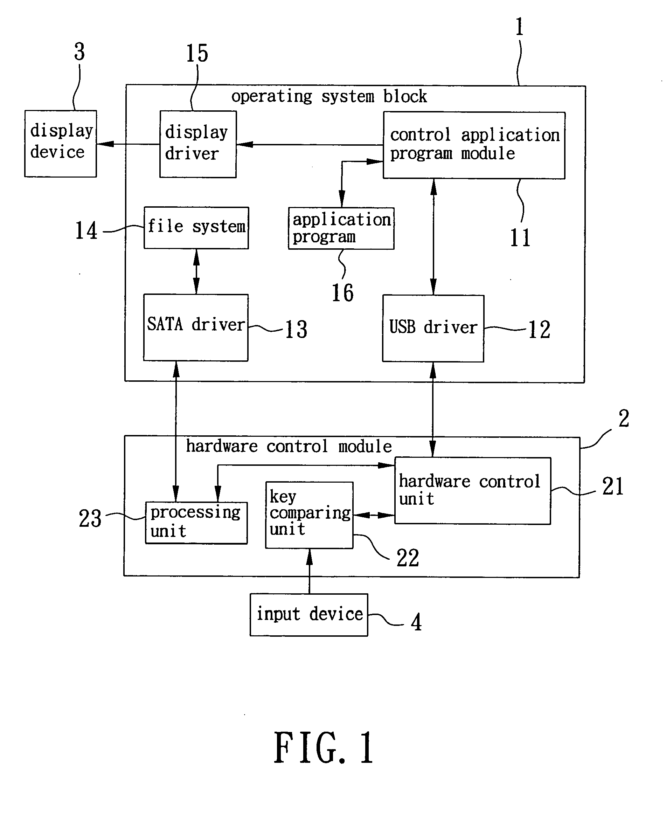

Referring to FIG.1, according to the preferred embodiment of the present invention, a computing apparatus includes an operating system block 1, such as Windows®, and a hardware control module 2 separate from the operating system block 1. The operating system block 1 is installed with a proprietary control application program module 11 for receiving an access request, which may be generated by the control application program module 11 upon its execution or by a triggering application program 16, depending on the particular situation, and is not limited thereto. The control application program module 11 is configured to generate a key confirmation request in response to the access request. The hardware control module 2 includes a hardware control unit 21, a key comparing unit 22, and a processing unit 23.

The hardware control unit 21 is in communication with the control application program module 11 for receiving the key confirmation request therefrom, and generates, via the control application program module 11, a key input request to prompt a user for a key input in response to receipt of the key confirmation request. In this embodiment, the hardware control unit 21 communicates with the control application program module 11 via a Universal Serial Bus (USB) interface including a USB driver 12 that is installed in the operating system block 1. Further, in this embodiment, the key input request is in the form of a message displayed on a display device 3, such as a screen, through driving by a display driver 15 in response to control by the control application program module 11.

The key comparing unit 22 is coupled to the hardware control unit 21, and determines, upon receipt of the key input by the user via an input device 4 that is coupled to the hardware control module 2, if the key input matches a predefined key. The predefined key is preset in the hardware control module 2, and keys may be added, changed or deleted by the user according to his/her needs. The input device 4 may be one of a keyboard, a mouse, a touch pad, or any other devices permitting input of information. The key comparing unit 22 further transmits a comparison result to the hardware control unit 21 to be subsequently transmitted to the control application program module 11 by the hardware control unit 21.

The processing unit 23 is coupled to the hardware control unit 21, and is capable of executing a processing request.

The hardware control module 2 enters an execution mode if it is determined by the key comparing unit 22 that the key input matches the predefined key. In the execution mode, the hardware control unit 21 transmits a key verification success message to the control application program module 11 to be displayed on the display device 3, and permits transmission of the processing request from the control application program module 11 thereto for execution by the processing unit 23. In this embodiment, processing capabilities of the processing unit 23 in the execution mode include file reconstruction, and converting a file into a selected one of hidden, read-only, and write-only states. In particular, the processing unit 23 communicates with a file system 14 in the operating system block 1 via a Serial Advanced Technology Attachment (SATA) interface including a SAT driver 13 installed in the operating system block 1, and is permitted to access the selected file for processing.

The hardware control module 2 enters a failure mode if it is determined by the key comparing unit 22 that the key input does not match the predefined key. In this embodiment, the hardware control unit 21 transmits a key verification failure message to the control application program module 11 to be displayed on the display device 3, and awaits another key confirmation request from the control application program module 11 when the hardware control module 2 enters the failure mode. Alternatively, after transmitting the key verification failure message, operations of the control application program module 11 and the hardware control module 2 are terminated when the hardware control module 2 enters the failure mode.

In this embodiment, in order to further enhance the effectiveness of key protection as provided by the present invention against attacks from unauthorized, malicious sources, such as dictionary attack, the hardware control module 2 further keeps track of the number of times of entering the failure mode, and operations of the control application program module 11 and the hardware control module 2 are terminated when the number of times reaches a predetermined number (e. g. , three). Alternatively, the hardware control module 2 keeps track of the number of times of entering the failure mode, and operations of the control application program module 11 and the hardware control module 2 are terminated when the number of times reaches a predetermined number within a predetermined time duration. It should be noted herein, however, that the main feature of the present invention does not reside in the mechanism used after the number of failures reaches the predetermined number, and therefore other known mechanisms may also be utilized in place of terminating operations of the control application program module 11 and the hardware control module 2 as disclosed herein.

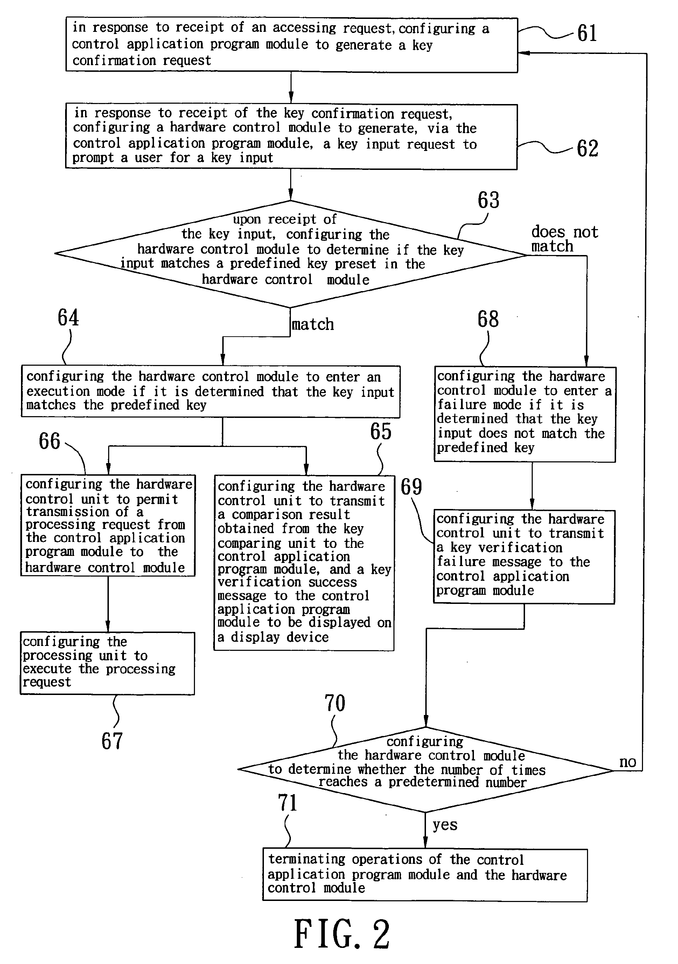

With further reference to FIG. 2, the key protecting method according to the preferred embodiment of the present invention includes the following steps.

In step 61, in response to receipt of an access request, the control application program module 11 is configured to generate the key confirmation request.

In step 62, in response to receipt of the key confirmation request, the hardware control module 2 is configured to generate, via the control application program module 11, the key input request to prompt the user for the key input.

In step 63, upon receipt of the key input, the hardware control module 2 determines if the key input matches the predefined key preset in the hardware control module 2. In particular, the key comparing unit 22 of the hardware control module 2 compares the key input with the predefined key.

In step 64, the hardware control module 2 is configured to enter the execution mode if it is determined in step 63 that the key input matches the predefined key.

In step 65, the hardware control unit 21 transmits the comparison result obtained from the key comparing unit 22 to the control application program module 11, and the key verification success message to the control application program module 11 to be displayed on the display device 3 via the USB interface, and in step 66, the hardware control unit 21 permits transmission of the processing request from the control application program module 11 to the hardware control module 2 for execution by the processing unit 23 in step 67. In this embodiment, in step 67, the processing unit 23 performs one of file reconstruction, and converting a file into a selected one of hidden, read-only, and write-only states.

In step 68, the hardware control module 2 is configured to enter the failure mode if it is determined in step 63 that the key input does not match the predefined key.

In step 69, the hardware control unit 21 transmits the key verification failure message to the control application program module 11 via the USB interface.

Optionally, the hardware control module 2 keeps track of the number of times of entering the failure mode, and in step 70, determines whether the number of times reaches a predetermined number. In the positive, the flow goes to step 71, where operations of the control application program module 11 and the hardware control module 2 are terminated. In the negative, the flow goes back to step 61 to await another key confirmation request. Alternatively, in step 70, the hardware control module 2 determines whether the number of times reaches a predetermined number within a predetermined time duration.

In yet another alternative, the operations of the control application program module 11 and the hardware control module 2 are terminated once step 69 is completed.

A practical operational application is presented hereinbelow with reference to FIG. 1 to better illustrate the present invention. When a user wishes to convert a file into the hidden state, first of all, the user activates the control application program module 11 installed in the operating system block 1. Subsequently, the control application program module 11 generates the key confirmation request and transmits the same to the hardware control unit 21 of the hardware control module 2 via the USB interface. Next, the hardware control unit 21 generates, via the control application programmodule 11, the key input request to be displayed by the display device 3 to prompt the user for the key input. After the user inputs the key using the input device 4 in direct communication with the key comparing unit 22, the key comparing unit 22 compares the key with the predefined key, and informs the hardware control unit 21 of the comparison result. Based on the comparison result, the hardware control unit 21 selectively transmits the key verification failure message or the key verification success message to the control application program module 11 through the USB interface to be displayed on the display device 3. If the comparison result shows that the key matches the predefined key, the hardware control unit 21 further permits transmission of the processing request from the control application program module 11 to the hardware control module 2, and informs the processing unit 23 to execute the necessary subsequent processing. In this instance, the processing request is related to converting the selected file into the hidden state. Therefore, the processing unit 23 conducts transactions with the file system 14 via the SATA interface for converting the selected file into the hidden state.

It should be noted herein that, in the above disclosure, it is assumed that the hardware control module 2 with the operating system block 1 using a USB interface, and that a SATA interface is used between the processing unit 23 and the file system 14. However, in practice, the hardware control module 2 may communicate with the operating system block 1 using means other than a USB interface, and the processing unit 23 may communicate with the file system 14 using means other than a SATA interface. Such variations should be readily apparent to those skilled in the art, and the disclosure herein should not be taken to limit the scope of the present invention.

Moreover, in an alternative embodiment, instead of transmitting the processing request to the hardware control module 2, the control application programmodule 11 transmits a command to another application program 16 installed in the operating system block 1 (such as a word processing application program), and permits the application program 16 to provide corresponding services (such as word processing abilities) to the user in order to perform intended operations.

In sum, the key protecting method and the computing apparatus of the present invention achieve the object of preventing a malicious entity from obtaining the predefined key by ensuring that the key provided by the user is inputted only to the key comparing unit 22 of the hardware control module 2, that key comparison is performed by the key comparing unit 22, and that only the comparison result (match or does not match) is provided to the operating system block 1. Consequently, even if the operating system block 1 is attacked by a malware, the key necessary for performing certain functions will not be stolen by the malware.

## Claims

1. A key protecting method comprising the steps of:
(a) in response to receipt of an access request, configuring a control application program module (11) to generate a key confirmation request;
(b) in response to receipt of the key confirmation request, configuring a hardware control module (2) to generate, via the control application program module (11), a key input request to prompt a user for a key input;
(c) upon receipt of the key input, configuring the hardware control module (2) to determine if the key input matches a predefined key preset in the hardware control module (2);
(d) configuring the hardware control module (2) to enter an execution mode if it is determined in step (c) that the key input matches the predefined key; and
(e) configuring the hardware control module (2) to enter a failure mode if it is determined in step (c) that the key input does not match the predefined key.

2. The key protecting method as claimed in Claim 1, wherein the hardware control module (2) includes a hardware control unit (21) that receives the key confirmation request from the control application program module (11), a key comparing unit (22), and a processing unit (23);
in step (c), the key comparing unit (22) compares the key input with the predefined key; and
in step (d), the hardware control unit (21) transmits a comparison result obtained from the key comparing unit (22) to the control application program module (11), and permits transmission of a processing request from the control application program module (11) to the hardware control module (2) for execution by the processing unit (23).

3. The key protecting method as claimed in Claim 2, wherein, in step (d), processing capabilities of the processing unit (23) in the execution mode include file reconstruction, and converting a file into a selected one of hidden, read-only, and write-only states.

4. The key protecting method as claimed in Claim 2, wherein, in step (e), the hardware control unit (21) transmits a key verification failure message to the control application program module (11), and the flow goes back to step (a) to await another key confirmation request.

5. The key protecting method as claimed in Claim 4, wherein, in step (e), the hardware control module (2) keeps track of the number of times of entering the failure mode, and operations of the control application program module (11) and the hardware control module (2) are terminated when the number of times reaches a predetermined number.

6. The key protecting method as claimed in Claim 4, wherein, in step (e), the hardware control module (2) keeps track of the number of times of entering the failure mode, and operations of the control application program module (11) and the hardware control module (2) are terminated when the number of times reaches a predetermined number within a predetermined time duration.

7. The key protecting method as claimed in Claim 2, wherein, in step (e), the hardware control unit (21) transmits a key verification failure message to the control application program module (11), and operations of the control application program module (11) and the hardware control module (2) are terminated.

8. The key protecting method as claimed in Claim 1, wherein the key input is inputted from an input device (4) coupled to the hardware control module (2).

9. The key protecting method as claimed in Claim 2, wherein, in step (d), the hardware control unit (21) transmits a key verification success message to the control application program module (11).

10. The key protecting method as claimed in Claim 2, wherein communication between the control application program module (11) and the hardware control unit (21) is conducted via a Universal Serial Bus (USB) interface.

11. A computing apparatus comprising:
an operating system block (1) that is installed with a control application program module (11) for receiving an access request, and generating a key confirmation request in response to the access request; and
a hardware control module (2) that includes
a hardware control unit (21) in communication with said control application program module (11) for receiving the key confirmation request therefrom, and generating, via the control application program module (11), a key input request to prompt a user for a key input in response to receipt of the key confirmation request,
a key comparing unit (22) coupled to said hardware control unit (21), determining, upon receipt of the key input by the user, if the key input matches a predefined key preset in said hardware control module (2), and transmitting a comparison result to said hardware control unit (21) to be subsequently transmitted to said control application programmodule (11) by said hardware control unit (21); and
wherein said hardware control module (2) enters an execution mode if it is determined by said key comparing unit (22) that the key input matches the predefined key; and
wherein said hardware control module (2) enters a failure mode if it is determined by said key comparing unit (22) that the key input does not match the predefined key.

12. The computing apparatus as claimed in Claim 11, wherein said hardware control module (2) further includes a processing unit (23) coupled to said hardware control unit (21), and capable of executing a processing request, and said hardware control unit (21) permits transmission of the processing request from said control application program module (11) thereto for execution by said processing unit (23) when said hardware control module (2) enters the execution mode.

13. The computing apparatus as claimed in any one of Claims 11 and 12, wherein said hardware control unit (21) transmits a key verification failure message to said control application program module (11) to be displayed on a display device (3), and awaits another key confirmation request from said control application program module (11) when said hardware control module (2) enters the failure mode.

14. The computing apparatus as claimed in any one of Claims 11 to 13, wherein said key comparing unit (22) is adapted to be coupled to an input device (4), through which the key input is provided to said key comparing unit (22).

15. The computing apparatus as claimed in any one of Claims 11 to 14, wherein said hardware control unit (21) transmits a key verification success message to the control application program module (11) for subsequent display on a display device (3) when said hardware control module (2) enters the execution mode.

16. The computing apparatus as claimed in any one of Claims 11 to 15, wherein communication between said control application program module (11) of said operating system block (1) and said hardware control unit (21) of said hardware control module (2) is conducted via a Universal Serial Bus (USB) interface.
